# EUROPÄISCHE PATENTSCHRIFT

(11) **EP 3 820 727 B1**
(45) Veröffentlichungstag und Bekanntmachung des Hinweises auf die Patenterteilung: **11.05.2022**
(21) Anmeldenummer: 18769962.4
(22) Anmeldetag: 07.09.2018
(51) Int. Cl.: B60K 35/00, G02B 27/01

(54) **VERFAHREN ZUM BETREIBEN EINER VON EINEM FAHRZEUGINSASSEN EINES KRAFTFAHRZEUGS AM KOPF GETRAGENEN ANZEIGEEINRICHTUNG UND ANZEIGESYSTEM FÜR EIN KRAFTFAHRZEUG**
METHOD FOR OPERATING A DISPLAY DEVICE WORN ON THE HEAD BY A VEHICLE OCCUPANT OF A MOTOR VEHICLE, AND DISPLAY SYSTEM FOR A MOTOR VEHICLE
PROCÉDÉ POUR FAIRE FONCTIONNER UN DISPOSITIF D'AFFICHAGE PORTÉ PAR UN OCCUPANT D'UN VÉHICULE AUTOMOBILE, SUR LA TÊTE, ET SYSTÈME D'AFFICHAGE CONÇU POUR UN VÉHICULE AUTOMOBILE

(30) Priorität: 09.07.2018 DE 102018211261
(43) Veröffentlichungstag der Anmeldung: 19.05.2021
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2018/074166
(87) Internationale Veröffentlichungsnummer: WO 2020/011383

(56) Entgegenhaltungen:
- DE-A1-102012 218 837
- DE-A1-102013 005 342
- DE-A1-102014 214 516

## Beschreibung

Die Erfindung betrifft ein Verfahren zum Betreiben einer von einem Fahrzeuginsassen eines Kraftfahrzeugs am Kopf getragenen Anzeigeeinrichtung der im Oberbegriff des Patentanspruchs 1 angegebenen Art. Des Weiteren betrifft die Erfindung noch ein Anzeigesystem für ein Kraftfahrzeug zum Durchführen eines solchen Verfahrens.

Es ist an sich bekannt, mittels am Kopf tragbarer Anzeigeeinrichtungen eine erweiterte Realität - sogenannte Augmented-Reality - für einen Fahrzeuginsassen zu schaffen. So zeigt beispielsweise die DE 10 2013 005 342 A1 eine Kraftfahrzeug-Bedienvorrichtung, umfassend eine Datenbrille zur Darstellung einer erweiterten Realität, wobei in einem Innenraum eines Kraftfahrzeugs virtuelle Projektionsflächen definiert werden, die mittels der Datenbrille überblendet werden.

Die DE 10 2014 006 732 A1 zeigt eine Bildüberlagerung von virtuellen Objekten in einem Kamerabild. Eine Datenbrille dient zur Darstellung einer erweiterten Realität in einem Innenraum eines Fahrzeugs, wobei in einem Bereich eines erfassten realen Körpers eine Darstellung einer erweiterten Realität ausgeblendet wird.

Die DE 10 2014 214 516 A1 zeigt eine Vorrichtung und ein Verfahren zur Wiedergabe von Daten in einer erweiterten Realität für einen Insassen eines Fahrzeugs. Die Vorrichtung umfasst eine Datenbrille, die zur Erzeugung einer virtuellen Realität dient, welche auf einer Projektionsfläche dargestellt wird.

Es ist die Aufgabe der vorliegenden Erfindung, eine Lösung bereitzustellen, mittels welcher eine Darstellung einer erweiterten Realität in einem Fahrzeug besonders sicher erfolgen kann.

Diese Aufgabe wird durch ein Verfahren zum Betreiben einer von einem Fahrzeuginsassen eines Kraftfahrzeugs am Kopf getragenen Anzeigeeinrichtung sowie durch ein Anzeigesystem für ein Kraftfahrzeug mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer von einem Fahrzeuginsassen eines Kraftfahrzeugs am Kopf getragenen Anzeigeeinrichtung werden mittels der Anzeigeeinrichtung Inhalte in einem Sichtfeld des Fahrzeuginsassen eingeblendet. Dabei werden Fahrzeugbereiche vorgegeben, die nicht mittels Inhalten der Anzeigeeinrichtung überblendet werden dürfen.

Die Anzeigeeinrichtung wird unter Berücksichtigung der vorgegebenen Fahrzeugbereiche so angesteuert, dass die Fahrzeugbereiche nicht mittels der angezeigten Inhalte überblendet werden.

Bei der am Kopf getragenen Anzeigeeinrichtung kann es sich um eine Augmented-Reality-Brille, eine Mixed-Reality-Brille oder auch um eine Augmented-Reality-Kontaktlinse handeln. Die Anzeigeeinrichtung ist also dazu ausgelegt, die natürliche visuelle Wahrnehmung des Fahrzeuginsassen mit einer künstlichen, computererzeugten visuellen Wahrnehmung zu vermischen. So können mittels der am Kopf getragenen Anzeigeeinrichtung verschiedenste Inhalte ins Sichtfeld des Fahrzeuginsassen eingeblendet werden.

Um eine besonders sichere Nutzung der am Kopf tragbaren Anzeigeeinrichtung im Kraftfahrzeug sicherzustellen, ist es dabei vorgesehen, die Fahrzeugbereiche vorzugegeben, die nicht mittels Inhalten der Anzeigeeinrichtung überblendet werden dürfen.

Handelt es sich bei dem Fahrzeuginsassen zum Beispiel um einen Fahrer des Kraftfahrzeugs, kann insbesondere in diesem Fall sichergestellt werden, dass dieser von den mittels der Anzeigeeinrichtung angezeigten Inhalten nicht von seiner eigentlichen Fahraufgabe abgelenkt beziehungsweise bei dieser gestört wird.

Wesentliche Informationen, wie beispielsweise Geschwindigkeitsanzeigen im Kombiinstrument oder mittels eines Head-up-Displays können so zum Beispiel nicht mittels der am Kopf getragenen Anzeigeeinrichtung überblendet werden.

Bei den Fahrzeugbereichen kann es sich beispielsweise um fahrzeugseitige Anzeigeeinrichtungen beziehungsweise fahrzeugseitige Anzeigeflächen für verschiedenste Informationen handeln. So kann beispielsweise ein Kombiinstrument des Kraftfahrzeugs ein solcher Fahrzeugbereich sein, der mittels der am Kopf getragenen Anzeigeeinrichtung nicht überblendet werden darf.

Gleiches kann beispielsweise auch für einen Bereich einer Windschutzscheibe des Kraftfahrzeugs gelten, auf welchen ein Head-up-Display verschiedenste Informationen projiziert. So können insbesondere für die Fahraufgabe wesentliche Informationen, wie maximal zulässige Geschwindigkeiten, die aktuelle Geschwindigkeiten und dergleichen, zuverlässig vom Fahrer des Kraftfahrzeugs wahrgenommen werden, auch wenn er die Anzeigeeinrichtung auf dem Kopf trägt.

Insgesamt wird mittels des erfindungsgemäßen Verfahrens also sichergestellt, dass ein die Anzeigeeinrichtung tragender Fahrzeuginsasse wichtige Anzeigen im Kraftfahrzeug und auch seine Fahrzeugumgebung jederzeit zuverlässig visuell wahrnehmen kann, auch wenn er die Anzeigeeinrichtung auf dem Kopf trägt.

Eine vorteilhafte Ausführungsform der Erfindung sieht vor, dass eine relative Anordnung der Anzeigeeinrichtung zu den vorgegebenen Fahrzeugbereichen ermittelt und bei der Ansteuerung der Anzeigeeinrichtung berücksichtigt wird. In Kenntnis der relativen Anordnung der Anzeigeeinrichtung ist es möglich, sicherzustellen, dass mittels der Anzeigeeinrichtung die vorgegebenen Bereiche nicht mit Inhalten der Anzeigeeinrichtung überblendet werden.

Eine weitere vorteilhafte Ausführungsform der Erfindung sieht vor, dass das Sichtfeld des die Anzeigeeinrichtung tragenden Fahrzeuginsassen ermittelt und bei der Ansteuerung der Anzeigeeinrichtung berücksichtigt wird. Beispielsweise kann eine Blickrichtung des Fahrzeuginsassen ermittelt werden, um auf das Blickfeld des Fahrzeuginsassen zu schließen. Die Anzeigeeinrichtung kann dafür geeignete Sensoren, beispielsweise auf die Augen des Fahrzeuginsassen gerichtete Kameras oder dergleichen aufweisen, um das Sichtfeld des Fahrzeuginsassen zuverlässig ermitteln zu können. In Kenntnis des Sichtfelds des die Anzeigeeinrichtung am Kopf tragenden Fahrzeuginsassen ist es besonders exakt möglich, die vorgegebenen Fahrzeugbereiche beim Anzeigen von Inhalten mittels der Anzeigeeinrichtung auszusparen.

Gemäß einer weiteren vorteilhaften Ausführungsform der Erfindung ist es vorgesehen, dass die vorgegebenen Fahrzeugbereiche, die nicht mittels Inhalten der Anzeigeeinrichtung überblendet dürfen, über eine fahrzeugseitige Datenschnittstelle an die Anzeigeeinrichtung übertragen werden. Die Datenübertragung zwischen der fahrzeugseitigen Datenschnittstelle und der Anzeigeeinrichtung erfolgt vorzugsweise drahtlos. Die fahrzeugseitige Datenschnittstelle kann beispielsweise an einen Fahrzeug-BUS gekoppelt sein, über welchen verschiedenste Informationen zum Kraftfahrzeug bereitgestellt werden können, wie zum Beispiel, wo genau sich bestimmte Displays oder andere Anzeigeeinrichtungen beziehungsweise Projektionsflächen für ein Head-up-Display oder dergleichen des Kraftfahrzeugs befinden. Genauso ist es möglich, über die fahrzeugseitige Datenschnittstelle Informationen darüber bereitzustellen, an welchen Positionen sich verschiedene Fenster, Rückspiegel, Außenspiegel und dergleichen des Kraftfahrzeugs befinden. Auch ist es möglich, über die fahrzeugseitige Datenschnittstelle Daten darüber bereitzustellen, mittels welcher Anzeigeeinrichtung des Kraftfahrzeugs gerade welche Informationen beziehungsweise Inhalte angezeigt werden. Über die fahrzeugseitige Datenschnittstelle ist es also möglich, die vorgegebenen Fahrzeugbereiche, die nicht mittels Inhalten der Anzeigeeinrichtung überblendet werden dürfen, für die am Kopf getragene Anzeigeeinrichtung zuverlässig zu definieren. Vorzugsweise ist die Kommunikation zwischen der fahrzeugseitigen Datenschnittstelle und der am Kopf getragenen Anzeigeeinrichtung permanent und nicht deaktiverbar. So kann sichergestellt werden, dass die Information zu den vorgegebenen Fahrzeugbereichen permanent beim Ansteuern der Anzeigeeinrichtung und beim Anzeigen von entsprechenden Inhalten berücksichtigt werden.

Eine weitere vorteilhafte Ausführungsform der Erfindung sieht vor, dass solange keine Datenverbindung zwischen der fahrzeugseitigen Datenschnittstelle und der Anzeigeeinrichtung besteht, das Einblenden von Inhalten mittels der Anzeigeeinrichtung unterbunden wird. So kann sichergestellt werden, dass die Anzeigeeinrichtung nur Inhalte einblenden kann, wenn diese mittels der fahrzeugseitigen Datenschnitte mit Daten versorgt wird, welche die vorgegebenen Fahrzeugbereiche definieren, die nicht mittels Inhalten der Anzeigeeinrichtung überblendet dürfen.

Solange keine Datenverbindung zwischen fahrzeugseitiger Datenschnittstelle und Anzeigeeinrichtung besteht, kann die Anzeigeeinrichtung keine Inhalte einblenden. Vorzugsweise ist eine Sperrfunktion, welche das Einblenden von Inhalten unterbindet, in der Anzeigeeinrichtung integriert. Nur wenn eine funktionsfähige Datenverbindung festgestellt wird, schaltet die Sperrfunktion das Einblenden von Inhalten frei. Bricht die Datenverbindung ab, so wird die Sperrfunktion aktiv. So kann sichergestellt werden, dass die Anzeigeeinrichtung keine Fahrzeugbereiche überblendet, welche insbesondere für einen Fahrer wesentliche Informationen enthalten oder für die Beobachtung des Verkehrsgeschehens relevant sind. Die Sicherheit beim Führen des Fahrzeugs kann dadurch erheblich gesteigert werden.

In weiterer vorteilhafter Ausgestaltung der Erfindung ist es vorgesehen, dass die vorgegebenen Fahrzeugbereiche, die nicht mittels Inhalten der Anzeigeeinrichtung überblendet dürfen, über eine Datenschnittstelle einer fahrzeugexternen App an die Anzeigeeinrichtung übertragen werden. Sollte beispielsweise die Informationsübermittlung beziehungsweise Datenübermittlung bezüglich der vorgegebenen Fahrzeugbereiche nicht über die fahrzeugseitige Datenschnittstelle und der am Kopf tragbaren Anzeigeeinrichtung erfolgen können, können zumindest Informationen über die vorgegebenen Fahrzeugbereiche, die nicht mittels Inhalten der Anzeigeeinrichtung überblendet werden dürfen, über die besagte Datenschnittstelle der fahrzeugexternen App an die Anzeigeeinrichtung übertragen werden. Diese fahrzeugexterne App kann beispielsweise direkt auf der Anzeigeeinrichtung betrieben werden. So wäre es zum Beispiel denkbar, dass fahrzeugspezifisch mittels der App die entsprechenden Fahrzeugbereiche vorgegeben werden. So kann die Anzeigeeinrichtung beispielsweise bei einer entsprechenden Kopplung mit dem betreffenden Kraftfahrzeug, zum Beispiel über eine Bluetoothverbindung oder dergleichen, automatisch feststellen, in was für einem Kraftfahrzeug die Anzeigeeinrichtung betrieben wird, infolgedessen die fahrzeugexterne App, welche zum Beispiel auf der Anzeigeeinrichtung selbst installiert sein kann, die Fahrzeugbereiche automatisch vorgibt, die nicht mittels Inhalten der Anzeigeeinrichtung überblendet werden dürfen. Ebenso ist es denkbar, dass die fahrzeugexterne App beispielsweise auf einem Smartphone installiert ist, welches dann die Daten bezüglich der vorgegebenen Fahrzeugbereiche, die nicht mittels Inhalten der Anzeigeeinrichtung überblendet werden dürfen, vorzugsweise drahtlos an die Anzeigeeinrichtung überträgt. Smartphones können üblicherweise zum Beispiel über Bluetooth oder über WLAN mit einem Infotainmentsystem eines Kraftfahrzeugs gekoppelt werden. In diesem Zuge wäre es denkbar, dass die auf dem Smartphone installierte App nach Herstellung der Verbindung mit dem Infotainmentsystem feststellt, um was für ein Kraftfahrzeug es sich handelt, um basierend darauf die entsprechenden Fahrzeugbereiche vorzugeben, die nicht mittels Inhalten der Anzeigeeinrichtung überblendet werden dürfen und diesbezügliche Daten an die Anzeigeeinrichtung übermittelt.

Eine weitere vorteilhafte Ausführungsform der Erfindung sieht vor, dass falls es sich beim die Anzeigeeinrichtung tragenden Fahrzeuginsassen um einen Fahrer des Kraftfahrzeugs handelt, bezogen auf sein Sichtfeld im Bereich von Fenstern des Kraftfahrzeugs jegliches Einblenden von Inhalten mittels der Anzeigeeinrichtung unterbunden wird, welche keine Fahraufgabe unterstützen. So ist es beispielsweise möglich, dass der Anzeigeeinrichtung erlaubt wird, beispielsweise im Bereich einer Windschutzscheibe Navigationsinformationen, Informationen zu zulässigen Höchstgeschwindigkeiten und dergleichen einzublenden, wohingegen es unterbunden wird, dass die Anzeigeeinrichtung jegliche Informationen, die keinen Bezug zur Fahraufgabe haben, nicht im Sichtfeld des Fahrers im Bereich von Fenstern des Kraftfahrzeugs einblendet. So kann sichergestellt werden, dass der Fahrer nicht von seiner eigentlichen Fahraufgabe und der Wahrnehmung des Fahrzeugumfelds abgelenkt wird.

Gemäß einer weiteren vorteilhaften Ausführungsform der Erfindung ist es vorgesehen, dass die Fahrzeugbereiche, die nicht mittels Inhalten der Anzeigeeinrichtung überblendet werden dürfen, unterschiedlich vorgegeben werden, wenn das Kraftfahrzeug autonom fährt oder manuell gefahren wird. insbesondere wenn es sich beim Träger der Anzeigeeinrichtung um den Fahrer des Kraftfahrzeugs handelt, kann es sinnvoll sein zu unterscheiden, ob das Kraftfahrzeug gerade autonom fährt oder vom Fahrer manuell gefahren wird. Im zuerst genannten Fall ist es denkbar, dass die Anzeigeeinrichtung zum Beispiel auch unterhaltende Inhalte auch dort im Sichtfeld des Fahrers einblenden darf, wo sich beispielsweise gerade ein Kombiinstrument des Kraftfahrzeugs befindet. Fährt der Fahrer das Kraftfahrzeug aber gerade selbst, so kann es vorgesehen sein, dass die Anzeigeeinrichtung so angesteuert wird, dass diese zumindest keine solchen Informationen im Bereich des Kombiinstruments überblendet, welche nichts mit der Fahraufgabe zu tun haben. Auch kann es beispielsweise vorgesehen sein, dass die Anzeigeeinrichtung einen Hinweis beziehungsweise eine Warnung ausgibt, wenn ein autonomer Fahrbetrieb des Kraftfahrzeugs demnächst beendet wird. So kann der Träger der Anzeigeeinrichtung, insbesondere wenn es sich dabei um den Fahrer des Kraftfahrzeugs handelt, frühzeitig darauf hingewiesen werden, dass er bald den manuellen Fahrbetrieb des Kraftfahrzeugs übernehmen muss.

Erfindungsgemäß ist es vorgesehen, dass die Fahrzeugbereiche, die nicht mittels Inhalten der Anzeigeeinrichtung überblendet dürfen, unterschiedlich vorgegeben werden, wenn es sich beim die Anzeigeeinrichtung tragenden Fahrzeuginsassen um einen Fahrer oder Mitfahrer des Kraftfahrzeugs handelt. Beispielsweise ist es möglich, mittels einer fahrzeugseitigen Kamera festzustellen, ob der die Anzeigeeinrichtung am Kopf tragende Fahrzeuginsasse auf einem Fahrersitz oder auf einem Beifahrersitz oder auf einer Rückbank des Kraftfahrzeugs sitzt, um zuverlässig festzustellen, ob der Träger der Anzeigeeinrichtung der Fahrer oder lediglich ein Mitfahrer ist. Beim Fahrer ist es wichtig zu beachten, dass die am Kopf getragene Anzeigeeinrichtung nur so angesteuert wird, dass sich den Fahrer beim Wahrnehmen der Fahraufgabe nicht stört und bestmöglich unterstützt. Beim Mitfahrer hingegen ist es durchaus möglich, mittels der Anzeigeeinrichtung Informationen beziehungsweise Inhalte, insbesondere auch von unterhaltendem Charakter, einzublenden, auch wenn diese beispielsweise dadurch einen Blick aus der Windschutzscheibe des Kraftfahrzeugs oder zum Beispiel auf ein Kombiinstrument des Kraftfahrzeugs oder dergleichen verdecken. Dadurch, dass unterschieden wird, ob es sich beim Träger der Anzeigeeinrichtung um den Fahrer oder lediglich um einen Mitfahrer handelt, kann die Anzeigeeinrichtung immer möglichst optimal angesteuert werden.

Das erfindungsgemäße Anzeigeeinrichtung für ein Kraftfahrzeug umfasst eine am Kopf tragbare Anzeigeeinrichtung und eine Datenschnitte zum Durchführen des erfindungsgemäßen Verfahrens oder einer vorteilhaften Ausführungsform des erfindungsgemäßen Verfahrens. Vorteilhafte Ausgestaltungen des erfindungsgemäßen Verfahrens sind als vorteilhafte Ausgestaltungen des erfindungsgemäßen Anzeigesystem und umgekehrt anzusehen, wobei das Anzeigesystem insbesondere Mittel zur Durchführung der Verfahrensschritte aufweist.

Eine vorteilhaften Ausführungsform des Anzeigesystems sieht vor, dass die Anzeigeeinrichtung eine Augmented-Reality-Brille, eine Mixed-Reality-Brille oder eine Augmented-Reality-Kontaktlinse ist. Mittels der Anzeigeeinrichtung können also im Sichtfeld des Fahrzeuginsassen verschiedenste Inhalte angezeigt werden, welche die visuell wahrnehmbare Realität mit verschiedensten Inhalten überblenden und somit anreichern können.

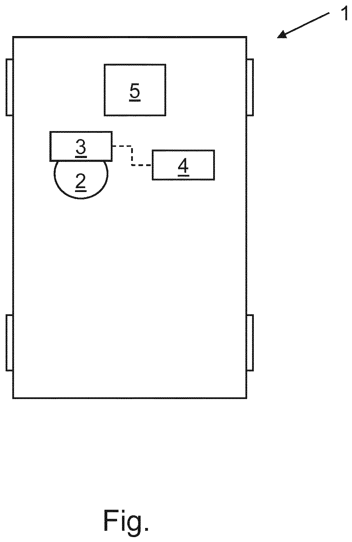

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in der einzigen Figur eine schematische Darstellung eines Kraftfahrzeugs, in dem ein Fahrzeuginsasse sitzt, der eine Augmented-Reality-Brille aufgesetzt hat, mittels welcher verschiedenste Informationen im Sichtfeld des Fahrzeuginsassen eingeblendet werden können.

Ein Kraftfahrzeug 1 ist in einer stark schematisierten Darstellung in der einzigen Figur gezeigt. Im Kraftfahrzeug 1 sitzt ein Fahrzeuginsasse 2, der eine Augmented-Reality-Brille 3 aufgesetzt hat. Die Augmented-Reality-Brille 3 ist mit einer fahrzeugseitigen Datenschnittstelle 4 verbunden. Mittels der Augmented-Reality-Brille 3 können für den Fahrzeuginsassen 2 in dessen Sichtfeld unterschiedlichste Informationen eingeblendet werden, um beispielsweise eine Fahraufgabe zu unterstützen oder auch um den Fahrzeuginsassen 2 einfach nur zu unterhalten.

So ist es beispielsweise möglich, mittels der Augmented-Reality-Brille 3 im Sichtfeld des Fahrzeuginsassen 2 Navigationshinweise, Informationen zur aktuellen Geschwindigkeit des Kraftfahrzeugs 1, zur aktuell zulässigen Höchstgeschwindigkeit und dergleichen einzublenden. Ferner ist es auch möglich, mittels der Augmented-Reality-Brille 3 - insbesondere auf Wunsch des Fahrzeuginsassen 2 - Informationen im Fahrzeugumfeld einzublenden, beispielsweise Informationen über Sehenswürdigkeiten, Restaurants oder anderer Points of Interest. Wichtig beim Betreiben der Augmented-Reality-Brille 3 ist, dass der Fahrzeuginsasse 2, insbesondere wenn es sich dabei um einen Fahrer des Kraftfahrzeugs 1 handelt, nicht bei der Wahrnehmung seiner Fahraufgabe gestört oder von dieser abgelenkt wird.

Beim Betreiben der Augmented-Reality-Brille 3 ist es daher vorgesehen, Fahrzeugbereiche 5 vorzugeben, die nicht mittels Inhalten der Augmented-Reality-Brille 3 überblendet werden dürfen.

Die Augmented-Reality-Brille 3 wird unter Berücksichtigung der vorgegebenen Fahrzeugbereiche so angesteuert, dass die Fahrzeugbereiche 5 nicht mittels der angezeigten Inhalte überblendet werden.

Bei den Fahrzeugbereichen 5 kann es sich beispielsweise um verschiedenste Displays des Kraftfahrzeugs 1, um ein Kombiinstrument des Kraftfahrzeugs 1, um einen Projektionsbereich eines Head-up-Displays, um Innenspiegel, Rückspiegel, Fenster des Kraftfahrzeugs und dergleichen handeln.

Über die fahrzeugseitige Schnittstelle 4 ist es vor allem auch möglich, Informationen darüber bereitzustellen, was für Inhalte gerade mit was für Anzeigeeinrichtungen des Kraftfahrzeugs 1 wiedergegeben werden. Wird mittels eines Head-up-Displays beispielsweise augenblicklich die aktuelle Geschwindigkeit des Kraftfahrzeugs 1 eingeblendet, so kann die Augmented-Reality-Brille 3 so angesteuert werden, dass diese genau an derselben Stelle, wo das Head-up-Display diese Information anzeigt, die gleiche Information anzeigt, wenn der Fahrzeuginsasse 2 seinen Kopf so dreht, dass er auf den Anzeigebereich beziehungsweise die Projektionsfläche des Head-up-Displays blickt. Gleiches kann auch für ein Kombiinstrument des Kraftfahrzeugs 1 gelten. Alternativ ist es auch möglich, dass die Augmented-Reality-Brille 3 so angesteuert wird, dass Bereiche des Kombiinstruments oder das gesamte Kombiinstrument oder beispielsweise eine Projektionsfläche eines Head-up-Displays immer so ausgespart werden, dass mittels der Augmented-Reality-Brille 3 angezeigte Inhalte diese vorgegebenen Fahrzeugbereiche 5 nicht überblenden.

Sowohl eine relative Anordnung der Augmented-Reality-Brille 3 zu den vorgegebenen Fahrzeugbereichen 5 als auch das Sichtfeld des Fahrzeuginsassen 2 können ermittelt und bei der Ansteuerung der Augmented-Reality-Brille 3 berücksichtigt werden. So kann zuverlässig sichergestellt werden, dass die vorgegebenen Fahrzeugbereiche 5 nicht mit Inhalten der Augmented-Reality-Brille 3 überblendet werden.

Sollte die fahrzeugseitige Datenschnittstelle 4 ausfallen oder beispielsweise gar nicht vorhanden sein, so ist es auch möglich, dass die vorgegebenen Fahrzeugbereiche, die nicht mittels Inhalten der Augmented-Reality-Brille 3 überblendet werden dürfen, über eine Datenschnittstelle einer fahrzeugexternen App an die Augmented-Reality-Brille 3 übertragen werden.

Diese App kann beispielsweise auf der Augmented-Reality-Brille 3 selbst oder beispielsweise auf einem vom Fahrzeuginsassen 2 mitgeführten Smartphone installiert sein. Durch Kommunikation zwischen dieser App und dem Kraftfahrzeug 1 ist es so beispielsweise möglich, festzustellen, um was für ein Kraftfahrzeug beziehungsweise um was für eine Kraftfahrzeugvariante es sich handelt. In Kenntnis dieser Information kann die App wiederum Daten generieren, welche die vorgegebenen Fahrzeugbereiche charakterisiert, die nicht mittels Inhalten der Augmented-Reality-Brille 3 überblendet werden dürfen. Sollte also die fahrzeugseitige Datenschnittstelle 4 nicht funktionieren oder schlichtweg im betreffenden Kraftfahrzeug 1 nicht vorhanden sein, so besteht durch die besagte fahrzeugexterne App zumindest die Möglichkeit, die vorgegebenen Fahrzeugbereiche 5 zu definieren, die nicht mittels Inhalten der Augmented-Reality-Brille 3 überblendet werden dürfen.

Falls es sich bei dem Fahrzeuginsassen 2 um einen Fahrer des Kraftfahrzeugs 1 handelt, kann es vorgesehen sein, dass bezogen auf sein Sichtfeld im Bereich von Fenstern des Kraftfahrzeugs 1 jegliches Einblenden von Inhalten mittels der Augmented-Reality-Brille 3 unterbunden wird, welche keine Fahraufgabe unterstützen. Gleiches kann beispielsweise auch für Seitenspiegel oder Rückspiegel des Kraftfahrzeugs 1 gelten. Auch kann es vorgesehen sein, dass in diesem Fall das gesamte Kombiinstrument des Kraftfahrzeugs 1 ausgenommen wird, also mittels der Augmented-Reality-Brille 3 keine Inhalte angezeigt werden können, die das Kombiinstrument für das Sichtfeld des Fahrers mit Inhalten überblenden würden.

Zudem kann auch unterschieden werden, ob das Kraftfahrzeug 1 gerade autonom fährt oder manuell gefahren wird. Handelt es sich beim Fahrzeuginsasse 2 um den Fahrer des Kraftfahrzeugs 1, so ist es im autonomen Fahrbetrieb denkbar, dass mittels der Augmented-Reality-Brille 3 keine oder wesentlich weniger der Fahrzeugbereiche 5 vorgesehen werden, in welchen die Augmented-Reality-Brille 3 keine Inhalte anzeigen darf. Sobald das Kraftfahrzeug 1 jedoch manuell gefahren wird, kann es zum Beispiel vorgesehen sein, dass sämtliche für die Führung des Kraftfahrzeugs 1 relevanten Fahrzeugbereiche 5 für die Überblendung von Inhalten mittels der Augmented-Reality-Brille 3 gesperrt werden. Ganz allgemein wird auch unterschieden, ob es sich bei dem Fahrzeuginsassen 2 um einen Fahrer oder um einen Mitfahrer handelt, wobei in Abhängigkeit davon die Fahrzeugbereiche 5 dann vorgegeben und die Augmented-Reality-Brille 3 entsprechend angesteuert wird.

Vorstehend war zwar nur die Rede von der Augmented-Reality-Brille 3, die beschriebenen Vorgehensweisen können aber ebenso auf Mixed-Reality-Brillen oder auch auf Augmented-Reality-Kontaktlinsen angewendet werden.

## Patentansprüche

1. Verfahren zum Betreiben einer von einem Fahrzeuginsassen (2) eines Kraftfahrzeugs (1) am Kopf getragenen Anzeigeeinrichtung (3), bei welchem mittels der Anzeigeeinrichtung (3) Inhalte in einem Sichtfeld des Fahrzeuginsassen (2) eingeblendet werden, wobei
- Fahrzeugbereiche (5) vorgegeben werden, die nicht mittels Inhalten der Anzeigeeinrichtung (3) überblendet werden dürfen;
- die Anzeigeeinrichtung (3) unter Berücksichtigung der vorgegebenen Fahrzeugbereiche (5) so angesteuert wird, dass die Fahrzeugbereiche (5) nicht mittels der angezeigten Inhalte überblendet werden,
**dadurch gekennzeichnet, dass**
- unterschieden wird, ob es sich bei dem Fahrzeuginsassen (2) um einen Fahrer oder um einen Mitfahrer handelt, wobei in Anhängigkeit davon die Fahrzeugbereiche (5) dann vorgegeben und die Anzeigeeinrichtung (3) entsprechend angesteuert wird.

2. Verfahren nach Anspruch 1,
**dadurch gekennzeichnet, dass**
eine relative Anordnung der Anzeigeeinrichtung (3) zu den vorgegebenen Fahrzeugbereichen ermittelt und bei der Ansteuerung der Anzeigeeinrichtung (3) berücksichtigt wird.

3. Verfahren nach Anspruch 1 oder 2,
**dadurch gekennzeichnet, dass**
das Sichtfeld des die Anzeigeeinrichtung (3) tragenden Fahrzeuginsassen (2) ermittelt und bei der Ansteuerung der Anzeigeeinrichtung (3) berücksichtigt wird.

4. Verfahren nach einem der vorhergehenden Ansprüche,
**dadurch gekennzeichnet, dass**
die vorgegebenen Fahrzeugbereiche (5), die nicht mittels Inhalten der Anzeigeeinrichtung (3) überblendet dürfen über eine fahrzeugseitige Datenschnittstelle (4) an die Anzeigeeinrichtung (3) übertragen werden.

5. Verfahren nach Anspruch 4,
**dadurch gekennzeichnet, dass**
solange keine Datenverbindung zwischen der fahrzeugseitigen Datenschnittstelle (4) und der Anzeigeeinrichtung (3) besteht, das Einblenden von Inhalten mittels der Anzeigeeinrichtung (3) unterbunden wird.

6. Verfahren nach einem der vorhergehenden Ansprüche,
**dadurch gekennzeichnet, dass**
die vorgegebenen Fahrzeugbereiche (5), die nicht mittels Inhalten der Anzeigeeinrichtung (3) überblendet dürfen, über eine Datenschnittstelle (4) einer fahrzeugexternen App an die Anzeigeeinrichtung (3) übertragen werden.

7. Verfahren nach einem der vorhergehenden Ansprüche,
**dadurch gekennzeichnet, dass**
falls es sich beim die Anzeigeeinrichtung (3) tragenden Fahrzeuginsassen (2) um einen Fahrer des Kraftfahrzeugs (1) handelt, bezogen auf sein Sichtfeld im Bereich von Fenstern des Kraftfahrzeugs (1) jegliches Einblenden von Inhalten mittels der Anzeigeeinrichtung (3) unterbunden wird, welche keine Fahraufgabe unterstützen.

8. Verfahren nach einem der vorhergehenden Ansprüche,
**dadurch gekennzeichnet, dass**
die Fahrzeugbereiche (5), die nicht mittels Inhalten der Anzeigeeinrichtung (3) überblendet werden dürfen unterschiedlich vorgegeben werden, wenn das Kraftfahrzeug (1) autonom fährt oder manuell gefahren wird.

9. Anzeigesystem für ein Kraftfahrzeug (1), umfassend eine am Kopf tragbare Anzeigeeinrichtung (3) und eine Datenschnitte, **dadurch gekennzeichnet, dass**
das Anzeigesystem zum Durchführen eines Verfahrens nach einem der vorhergehenden Ansprüche eingerichtet ist.

10. Anzeigesystem nach Anspruch 9,
**dadurch gekennzeichnet, dass**
die Anzeigeeinrichtung (3) eine Augmented-Reality-Brille eine Mixed-Reality-Brille oder eine Augmented-Reality-Kontaktlinse ist.

## Claims

1. Method for operating a display device (3) worn on the head by a vehicle occupant (2) of a motor vehicle (1), in which contents are displayed in a field of vision of the vehicle occupant (2) by means of the display device (3), wherein
- vehicle areas (5) are specified which may not be overlaid by contents of the display device (3);
- the display device (3) is controlled taking into account the specified vehicle areas (5) in such a way that the vehicle areas (5) are not overlaid by the displayed contents,
**characterised in that**
- a distinction is made as to whether the vehicle occupant (2) is a driver or a passenger, wherein the vehicle areas (5) are then specified in dependence thereon and the display device (3) is controlled accordingly.

2. Method according to claim 1,
**characterised in that**
a relative arrangement of the display device (3) to the specified vehicle areas is determined and taken into account in the control of the display device (3).

3. Method according to claim 1 or 2,
**characterised in that**
the field of vision of the vehicle occupant (2) wearing the display device (3) is determined and taken into account in the control of the display device (3).

4. Method according to any one of the preceding claims,
**characterised in that**
the specified vehicle areas (5) which may not be overlaid by contents of the display device (3) are transmitted to the display device (3) via a vehicle-side data interface (4).

5. Method according to claim 4,
**characterised in that**
as long as there is no data connection between the vehicle-side data interface (4) and the display device (3), the display of contents by means of the display device (3) is prevented.

6. Method according to any one of the preceding claims,
**characterised in that**
the predefined vehicle areas (5), which may not be overlaid by contents of the display device (3), are transmitted to the display device (3) via a data interface (4) of an app external to the vehicle.

7. Method according to any one of the preceding claims,
**characterised in that**
if the vehicle occupant (2) wearing the display device (3) is a driver of the motor vehicle (1), in relation to his field of vision in the area of windows of the motor vehicle (1), any display of contents by the display device (3) which do not support a driving task is prevented.

8. Method according to any one of the preceding claims,
**characterised in that**
the vehicle areas (5) which may not be superimposed by contents of the display device (3) may be specified differently when the motor vehicle (1) is driving autonomously or is being driven manually.

9. Display system for a motor vehicle (1), comprising a head-wearable display device (3) and a data sections, **characterised in that**
the display system is adapted to carry out a method according to any one of the preceding claims.

10. Display system according to claim 9,
**characterised in that**
the display device (3) is a pair of augmented reality glasses a pair of mixed reality glasses or an augmented reality contact lens.

## Revendications

1. Procédé pour faire fonctionner un dispositif d'affichage (3) porté sur la tête par un occupant de véhicule (2) d'un véhicule automobile (1), dans lequel des contenus sont intégrés dans un champ visuel de l'occupant de véhicule (2) au moyen du dispositif d'affichage (3), dans lequel
- des zones de véhicule (5) dans lesquelles des contenus du dispositif d'affichage (3) ne doivent pas être superposés sont déterminées ;
- le dispositif d'affichage (3) est commandé en tenant compte des zones de véhicule déterminées (5) de manière à ce que les contenus affichés ne soient pas superposés dans les zones de véhicule (5),
**caractérisé en ce que**
- une distinction est faite selon que l'occupant de véhicule (2) soit un conducteur ou un passager, dans lequel les zones de véhicule (5) sont alors déterminées en fonction de cela, et le dispositif d'affichage (3) est commandé de manière correspondante.

2. Procédé selon la revendication 1,
**caractérisé en ce que**
un positionnement relatif du dispositif d'affichage (3) par rapport aux zones de véhicule déterminées est défini et pris en compte par la commande du dispositif d'affichage (3).

3. Procédé selon la revendication 1 ou 2,
**caractérisé en ce que**
le champ visuel de l'occupant de véhicule (2) portant le dispositif d'affichage (3) est défini et pris en compte par la commande du dispositif d'affichage (3).

4. Procédé selon l'une quelconque des revendications précédentes,
**caractérisé en ce que**
les zones de véhicule déterminées (5) dans lesquelles des contenus du dispositif d'affichage (3) ne doivent pas être superposés sont transmises au dispositif d'affichage (3) via une interface de données (4) côté véhicule.

5. Procédé selon la revendication 4,
**caractérisé en ce que**
tant qu'il n'y a pas de connexion de données entre l'interface de données (4) côté véhicule et le dispositif d'affichage (3), l'intégration de contenus au moyen du dispositif d'affichage (3) est empêchée.

6. Procédé selon l'une quelconque des revendications précédentes,
**caractérisé en ce que**
les zones de véhicule déterminées (5), dans lesquelles des contenus du dispositif d'affichage (3) ne doivent pas être superposés sont transmises au dispositif d'affichage (3) via une interface de données (4) d'une application externe au véhicule.

7. Procédé selon l'une quelconque des revendications précédentes,
**caractérisé en ce que**
si l'occupant de véhicule (2) portant le dispositif d'affichage (3) est un conducteur du véhicule automobile (1), par rapport à son champ visuel dans la zone des vitres du véhicule automobile (1), toute intégration de contenus au moyen du dispositif d'affichage (3) est empêchée, qui ne supporte pas une tâche de conduite.

8. Procédé selon l'une quelconque des revendications précédentes,
**caractérisé en ce que**
les zones de véhicule (5) dans lesquelles des contenus du dispositif d'affichage (3) ne doivent pas être superposées peuvent être déterminées différemment si le véhicule automobile (1) se conduit de manière autonome ou s'il est conduit manuellement.

9. Système d'affichage pour un véhicule automobile (1), comprenant un dispositif d'affichage à porter sur la tête (3) et une interface de données, **caractérisé en ce que**
le système d'affichage est conçu pour exécuter un procédé selon l'une quelconque des revendications précédentes.

10. Système d'affichage selon la revendication 9,
**caractérisé en ce que**
le dispositif d'affichage (3) est des lunettes à réalité augmentée, des lunettes à réalité mixte ou des lentilles de contact à réalité augmentée.
